# EUROPÄISCHE PATENTSCHRIFT

(11) **EP 3 485 240 B1**
(45) Veröffentlichungstag und Bekanntmachung des Hinweises auf die Patenterteilung: **02.09.2020**
(21) Anmeldenummer: 17745288.5
(22) Anmeldetag: 14.07.2017
(51) Int. Cl.: G01F 23/296

(54) **VERFAHREN UND VORRICHTUNG ZUM BESTIMMEN DER ORTSAUFGELÖSTEN FÜLLSTANDSHÖHE IN EINEM SCHÜTTGUTBEHÄLTER**
METHOD AND APPARATUS FOR DETERMINING THE SPATIALLY RESOLVED FILL LEVEL IN A BULK MATERIAL CONTAINER
PROCÉDÉ ET DISPOSITIF DE DÉTERMINATION DE LA HAUTEUR DE REMPLISSAGE À RÉSOLUTION SPATIALE DANS UN CONTENANT DE PRODUIT EN VRAC

(30) Priorität: 18.07.2016 DE 102016213033
(43) Veröffentlichungstag der Anmeldung: 22.05.2019
(73) Patentinhaber: Trumpf Werkzeugmaschinen GmbH + Co. KG, 71254 Ditzingen (DE)
(72) Erfinder: KIEFER, Manuel, 74889 Sinsheim (DE); POENITZ, Willi, 71229 Leonberg (DE); SCHWARZ, Benjamin, 70825 Korntal-Münchingen (DE)
(74) Vertreter: Kohler Schmid Möbus Patentanwälte
(86) Internationale Anmeldenummer: PCT/EP2017/067926
(87) Internationale Veröffentlichungsnummer: WO 2018/015314

(56) Entgegenhaltungen:
- EP-A1- 2 803 952
- CN-A- 1 776 124
- DE-A1- 10 106 176
- JP-A- 2002 148 100
- JP-U- S62 152 283
- US-A1- 2004 031 335
- US-A1- 2015 048 963
- US-A1- 2015 101 406

## Beschreibung

Die Erfindung betrifft ein Verfahren zum Bestimmen der ortsaufgelösten Füllstandshöhe in einem oben offenen Schüttgutbehälter, wobei die Füllstandshöhe des im Schüttgutbehälter befindlichen Schüttguts von oben mittels Ultraschall ortsaufgelöst über der Behälteröffnung gemessen wird, sowie eine Vorrichtung zur Bestimmung der ortsaufgelösten Füllstandshöhe in einem oben offenen Schüttgutbehälter mit mindestens einem Ultraschall-Distanzsensor zum Überfahren der Behälteröffnung des Schüttgutbehälters.

Ein derartiges Verfahren und eine derartige Vorrichtung sind beispielsweise durch die WO 99/32859 A1 und auch in JP 2002 148100 A bekannt geworden.

Die aus der WO 99/32859 A1 bekannte Verladeanlage dient zum Beladen von Waggons eines Zuges, genauer gesagt von Transportbehältern der Waggons, mit Schüttgut. Die Verladeanlage weist einen Vorfüllsensor auf, um die Schüttgutmenge zu ermitteln, die sich vor dem Beladen im Transportbehälter befindet. Der Vorfüllsensor ist als Ultraschallscanner ausgebildet, dessen Scanstrahl quer zur Fahrtrichtung des Zuges läuft. Aus dem eindimensionalen Entfernungssignal des Ultraschallscanners kann durch die Scanbewegung einerseits und die Fahrbewegung des Zuges andererseits die Füllstandshöhe des Transportbehälters ortsaufgelöst gemessen werden. Bei dem in Zügen transportierten Schüttgut handelt es sich in der Regel um rieselfähiges Schüttgut mit einheitlichen Abmessungen, wie Kohle oder Sand, das in einem Transportbehälter stets zu einer dreidimensionalen Schüttgutoberfläche ohne Ecken und Kanten führt.

Für nicht einheitliches Schüttgut mit unterschiedlicher Ausprägung in Größe und Form ist die aus WO 99/32859 A1 bekannte Messung der Füllstandshöhe jedoch nicht geeignet, um bei der ortsaufgelösten Messung der Füllstandshöhe Schüttgutteile, die aufgrund von Reflexen zu Fehlinformationen führen, oder weit hochstehende Schüttgutkanten stets zuverlässig zu erfassen. So werden beim Laserschneiden geschnittene Blechteile aus einer Laserschneidanlage ausgeschleust und fallen dann als Schüttgut chaotisch in einen ortsfesten Behälter, in dem die Blechteile beliebig orientiert hochstehen können. Für einen rechtzeitigen Behälterwechsel muss der Füllgrad des Schüttgutbehälters aber trotz Fehlreflexen und hochstehender Blechteilkanten möglichst genau bestimmt werden können. Das aus WO 99/32859 A1 bekannte Messverfahren ist zudem bei ortsfesten Behältern nicht anwendbar.

Der vorliegenden Erfindung liegt daher die Aufgabe zugrunde, bei einem Verfahren und einer Vorrichtung der jeweils eingangs genannten Art die Genauigkeit und Zuverlässigkeit der ortsaufgelösten Messung der Füllstandshöhe weiter zu erhöhen.

Diese Aufgabe wird dadurch gelöst, dass die Füllstandshöhe des Schüttguts
i) nicht erfindungsgemäß von oben aus mehreren unterschiedlichen Ultraschall-Messrichtungen jeweils über der Behälteröffnung ortsaufgelöst gemessen wird, oder
ii) erfindungsgemäß von oben aus mehreren parallelen oder nahezu parallelen Ultraschall-Messrichtungen jeweils über der Behälteröffnung ortsaufgelöst gemessen wird,
   und dass aus den mehreren ortsaufgelösten Füllstandshöhenmessungen mindestens eine der folgenden Größen ermittelt wird:
   - eine ortsaufgelöste effektive Füllstandshöhe,
   - eine (dreidimensionale) Hüllfläche des Schüttguts,
   - ein globales Maximum des Schüttguts, und
   - einen Füllgrad des Schüttgutbehälters.
Das im Schüttgutbehälter befindliche Schüttgut wird nicht erfindungsgemäß aus mindestens zwei unterschiedlichen oder erfindungsgemäß parallelen bzw. nahezu parallelen Ultraschall-Messrichtungen vermessen, wodurch nicht erfindungsgemäß Schüttgutteile, die in der einen Messrichtung nicht korrekt erfasst werden, dann in der anderen Messrichtung korrekt erfasst werden. Aus den mehreren ortsaufgelösten Füllstandshöhenmessungen kann dann z.B. durch Addieren oder Mitteln eine ortsaufgelöste effektive Füllstandshöhe, durch Interpolieren und Überlagern eine dreidimensionale Hüllfläche des Schüttguts und hieraus wiederum ein globales Maximum des Schüttguts sowie das aktuelle Schüttgutvolumen und der aktuelle Füllgrad des Schüttgutbehälters ermittelt werden. Im Fall von nicht erfindungsgemäßen unterschiedlichen Ultraschall-Messrichtungen kann aus den mehreren ortsaufgelösten Füllstandshöhenmessungen eine messrichtungsunabhängigere, ortsaufgelöste effektive Füllstandshöhe ermittelt werden. Das nicht erfindungsgemäße Verfahren ermöglicht somit eine zuverlässige Füllstandsbestimmung eines Schüttgutbehälters mit Blechteilen unterschiedlicher Ausprägung in Größe und Form bzw. eine zuverlässige Abschätzung der Obergrenze der aktuellen Füllstandshöhe.

Beim Ultraschallscannen hat, im Gegensatz zu optischen Messverfahren, die Oberflächenbeschaffenheit des Schüttguts, wie z.B. Bleche, keinen Einfluss auf die Distanzmessung. Durch die Robustheit gegenüber Umwelteinflüssen gibt es für die Einsatzbereiche des Ultraschallscannens kaum Einschränkungen.

In einer Ausführung der nicht erfindungsgemäßen Verfahrensvariante i) wird die Behälteröffnung bevorzugt von mindestens einem Ultraschall-Distanzsensor mehrmals, aber mit jeweils unterschiedlich ausgerichteter Messrichtung - möglichst flächendeckend - überfahren. Der mindestens eine Ultraschall-Distanzsensor kann in seinen unterschiedlichen Messrichtungen in der gleichen Bahnkurve oder, was bevorzugt ist, in jeweils unterschiedlichen Bahnkurven über der Behälteröffnung verfahren wird. Mit dem mindestens einen Ultraschall-Distanzsensor ist eine Berechnung der Hüllfläche in Echtzeit allerdings nicht möglich.

In einer anderen Ausführung der nicht erfindungsgemäßen Verfahrensvariante i) wird die Behälteröffnung von mehreren, jeweils in unterschiedlichen Messrichtungen ausgerichteten Ultraschall-Distanzsensoren mindestens einmal - möglichst flächendeckend - überfahren. Vorzugsweise werden die mehreren Ultraschall-Distanzsensoren gemeinsam als Sensoreinheit (Sensor-Array) über der Behälteröffnung verfahren, wobei bei mehreren quer zur Verfahrrichtung nebeneinander angeordneten Ultraschall-Distanzsensoren die Sensoreinheit nur in einer Verfahrrichtung über der Behälteröffnung verfahren zu werden braucht.

Aufgrund der mehreren Messrichtungen können in diesen beiden Ausführungen der nicht erfindungsgemäßen Verfahrensvariante i) hochstehende Bauteilkanten auch bei schneller Verfahrgeschwindigkeit des bzw. der Ultraschall-Distanzsensoren - trotz der geringen Flächenauflösung von Ultraschall-Distanzsensoren - zuverlässig identifiziert werden. Bei den eingesetzten Ultraschall-Distanzsensoren handelt es sich um Standardkomponenten, die sich durch eine hohe Lebensdauer auszeichnen und in einem breiten Spektrum verfügbar sind.

In einer Ausführung der Verfahrensvariante ii) werden die mehreren Ultraschall-Messungen mit Ultraschall-Messkegeln, welche von den mehreren Ultraschall-Distanzsensoren ausgesandt werden und innerhalb des Behälters einander nicht oder zumindest nicht wesentlich überlappen, gleichzeitig durchgeführt. In einer nicht erfindungsgemäßen anderen Ausführung der Verfahrensvariante ii) werden die mehreren Ultraschall-Messungen mit Ultraschall-Messkegeln, welche von den mehreren Ultraschall-Distanzsensoren ausgesandt werden und innerhalb des Behälters einander überlappen, entweder nicht gleichzeitig oder mit jeweils unterschiedlicher Codierung gleichzeitig durchgeführt. Im letzteren Fall werden die Ultraschallsignale jeder Ultraschall-Messung derart kodiert, so dass sie von anderen Ultraschallsignalen der Ultraschallmessung unterscheidbar sind.

In diesen beiden Ausführungen der Verfahrensvariante ii) kann die Behälteröffnung von den mehreren, in parallelen oder nahezu parallelen Messrichtungen ausgerichteten Ultraschall-Distanzsensoren, insbesondere gemeinsam als Sensoreinheit, mindestens einmal überfahren werden. Erfindungsgemäß misst zumindest einer der Ultraschall-Distanzsensoren in mindestens einer, insbesondere in beiden Verfahrrichtungen jeweils gegenüber den anderen Ultraschall-Distanzsensoren vor- oder nacheilend.

Der Füllgrad des Schüttgutbehälters lässt sich besonderes einfach aus den mehreren ortsaufgelösten Füllstandshöhenmessungen und einer ortsaufgelösten Füllstandshöhen-Referenzmessung an einem leeren Schüttgutbehälter, insbesondere aus der ermittelten Hüllfläche des Schüttguts und einer Referenz-Hüllfläche des leeren Schüttgutbehälters, ermitteln.

Die Erfindung betrifft auch eine Vorrichtung zur Bestimmung der ortsaufgelösten Füllstandshöhe in einem oben offenen Schüttgutbehälter mit mindestens einem Ultraschall-Distanzsensor zum Überfahren der Behälteröffnung des Schüttgutbehälters, wobei die Vorrichtung nicht erfindungsgemäß mindestens einen Ultraschall-Distanzsensor mit verstellbarer Messrichtung oder mehrere Ultraschall-Distanzsensoren, welche in unterschiedlichen Messrichtungen oder erfindungsgemäß in parallelen oder nahezu parallelen Messrichtungen ausgerichtet sind, eine Verfahreinrichtung zum ein- oder zweidimensionalen Verfahren des mindestens einen Ultraschall-Distanzsensors über der Behälteröffnung, und eine Auswerteeinheit aufweist, die aus mehreren, ortsaufgelösten Füllstandshöhenmessungen mindestens eine der folgenden Größen ermittelt:
- eine ortsaufgelöste effektive Füllstandshöhe,
- eine (dreidimensionale) Hüllfläche des Schüttguts,
- ein globales Maximum des Schüttguts, und
- einen Füllgrad des Schüttgutbehälters.
Nicht erfindungsgemäß ist der mindestens eine Ultraschall-Distanzsensor mit verstellbarer Messrichtung beweglich an der Verfahreinrichtung gelagert und mittels einer elektrisch angesteuerten Verstelleinrichtung zwischen mindestens zwei unterschiedlichen Messrichtungen bewegbar.

In einer ersten bevorzugten Ausführungsform überlappen die von den mehreren Ultraschall-Distanzsensoren ausgesandten Ultraschall-Messkegel innerhalb des Behälters einander nicht oder zumindest nicht wesentlich, so dass sich die einzelnen Ultraschall-Messungen gegenseitig nicht oder nur noch vernachlässigbar beeinflussen. In einer anderen nicht erfindungsgemäßen Ausführungsform überlappen die Ultraschall-Messkegel der mehreren Ultraschall-Distanzsensoren einander und sind unterschiedlich codiert, so dass sie von den Ultraschallsignalen der anderen Ultraschallmessungen unterscheidbar sind.

Vorzugsweise bilden die mehreren Ultraschall-Distanzsensoren eine gemeinsam verfahrbare Sensoreinheit (Sensor-Array) aus, wobei zumindest einer der Ultraschall-Distanzsensoren in mindestens einer, insbesondere in beiden Verfahrrichtungen der Sensoreinheit jeweils gegenüber den anderen Ultraschall-Distanzsensoren versetzt angeordnet sein kann.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste nicht erfindungsgemäße Vorrichtung mit einem einzigen Ultraschall-Distanzsensor zur Bestimmung der ortsaufgelösten Füllstandshöhe in einem Schüttgutbehälter;
- Fig. 2: einen zwischen zwei Endstellungen verschwenkbaren nicht erfindungsgemäßen Ultraschall-Distanzsensor;
- Fign. 3a, 3b: verschiedene Bahnkurven zum flächendeckenden Verfahren des nicht erfindungsgemäßen Ultraschall-Distanzsensors über der Behälteröffnung des Schüttgutbehälters;
- Fig. 4: eine aus nicht erfindungsgemäßen zwei messrichtungsabhängigen ortsaufgelösten Füllstandshöhenmessungen ermittelte Hüllkurve des Schüttguts;
- Fig. 5: eine zweite nicht erfindungsgemäße Vorrichtung mit einer Sensoreinheit aus mehreren Ultraschall-Distanzsensoren zur Bestimmung der ortsaufgelösten Füllstandshöhe in einem Schüttgutbehälter;
- Fig. 6: eine nicht erfindungsgemäße Bahnkurve zum flächendeckenden Verfahren der Sensoreinheit über der Behälteröffnung des Schüttgutbehälters;
- Fig. 7: eine nicht erfindungsgemäße aus drei messrichtungsabhängigen ortsaufgelösten Füllstandshöhenmessungen ermittelte Hüllkurve des Schüttguts;
- Fign. 8a, 8b: eine dritte und vierte erfindungsgemäße Vorrichtung mit einer Sensoreinheit aus mehreren Ultraschall-Distanzsensoren zur Bestimmung der ortsaufgelösten Füllstandshöhe in einem Schüttgutbehälter; und
- Fig. 9: die Unteransicht einer in Fign. 8a, 8b gezeigten Sensoreinheit.

In der folgenden Beschreibung der Zeichnung werden für gleiche bzw. funktionsgleiche Bauteile identische Bezugszeichen verwendet.

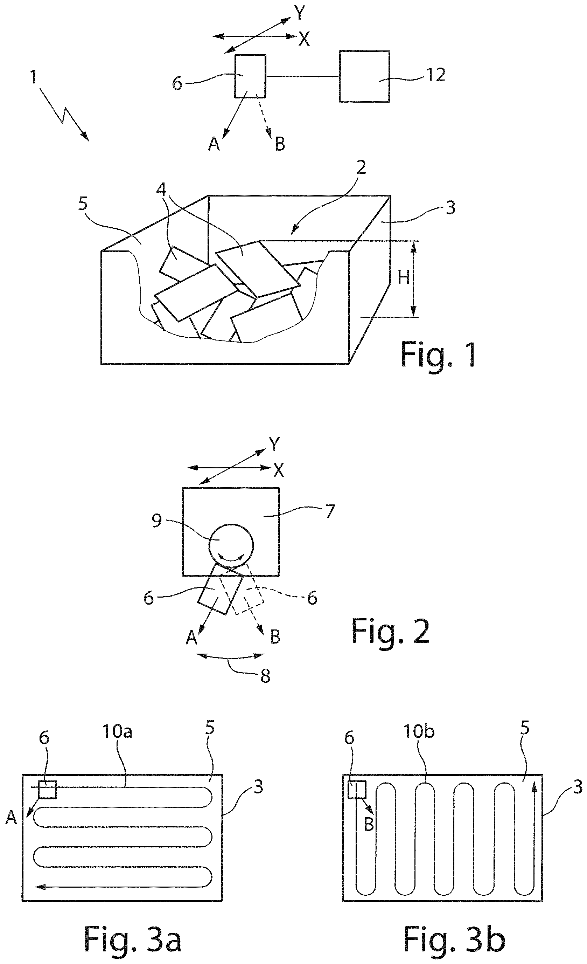

Die in **Fig. 1** gezeigte nicht erfindungsgemäße Vorrichtung **1** dient zur Bestimmung der ortsaufgelösten Füllstandshöhe **H** von Schüttgut **2** in einem oben offenen Schüttgutbehälter **3.** Im gezeigten Ausführungsbeispiel handelt es sich bei dem Schüttgut 2 um geschnittene Blechteile **4,** die chaotisch in den ortsfesten Schüttgutbehälter 3 fallen und daher beliebig orientiert hochstehen können.

Die Vorrichtung 1 weist oberhalb der Behälteröffnung **5** des Schüttgutbehälters 3 einen in **X-** und **Y**-Richtung verfahrbaren Ultraschall-Distanzsensor **6** mit mehreren, hier lediglich beispielhaft zwei unterschiedlichen Messrichtungen **A**, **B** auf, mit dem die Behälteröffnung 5 flächendeckend überfahren werden kann.

Wie in **Fig. 2** gezeigt, kann der Distanzsensor 6 an einer XY-Verfahreinheit **7** schwenkbar (Doppelpfeil **8**) gelagert sein und mittels einer elektrisch angesteuerten Verstelleinrichtung (z.B. Schrittmotor oder Drehmagnet) **9** zwischen zwei Endstellungen verschwenkt werden, in denen der Distanzsensor 6 in den beiden unterschiedlichen Messrichtungen A, B ausgerichtet ist.

Der Distanzsensor 6 misst - innerhalb eines räumlich ausgeprägten Erfassungsbereichs - die Distanz zum Schüttgut 2, also zu den Blechteilen 4. Die Ultraschall-Abstandsmessung ist ein Laufzeitverfahren, bei dem ein Ultraschall-Burst vom Distanzsensor 6 ausgesendet und das an einer Objektoberfläche reflektierte Echo vom Distanzsensor 6 empfangen wird. Aus der zeitlichen Differenz zwischen Senden und Empfangen und der Schallgeschwindigkeit wird der zurückgelegte Weg berechnet und so die kürzeste Distanz zwischen Distanzsensor 6 und Objektoberfläche gemessen. Nicht erfindungsgemäß, wird die Behälteröffnung 5 vom Distanzsensor 6 zuerst mit der einen Messrichtung A und anschließend mit der anderen Messrichtung B jeweils möglichst flächendeckend überfahren, um die Füllstandshöhe H des Schüttguts 2 ortsaufgelöst für jede der beiden Messrichtungen A, B flächendeckend über der Behälteröffnung 5 zu messen. Für eine flächendeckende Erfassung muss die Behälteröffnung 5 so gescannt werden, dass jeder Punkt der Behälteröffnung 5 während des Scanvorgangs wenigstens einmal innerhalb des Erfassungsbereichs des Distanzsensors 6 liegt.

Wie in **Fign. 3a, 3b** gezeigt, kann, nicht erfindungsgemäß, der Distanzsensor 6 mit seinen unterschiedlichen Messrichtungen A, B in jeweils unterschiedlichen Bahnkurven **10a, 10b** über der Behälteröffnung 5 verfahren werden.

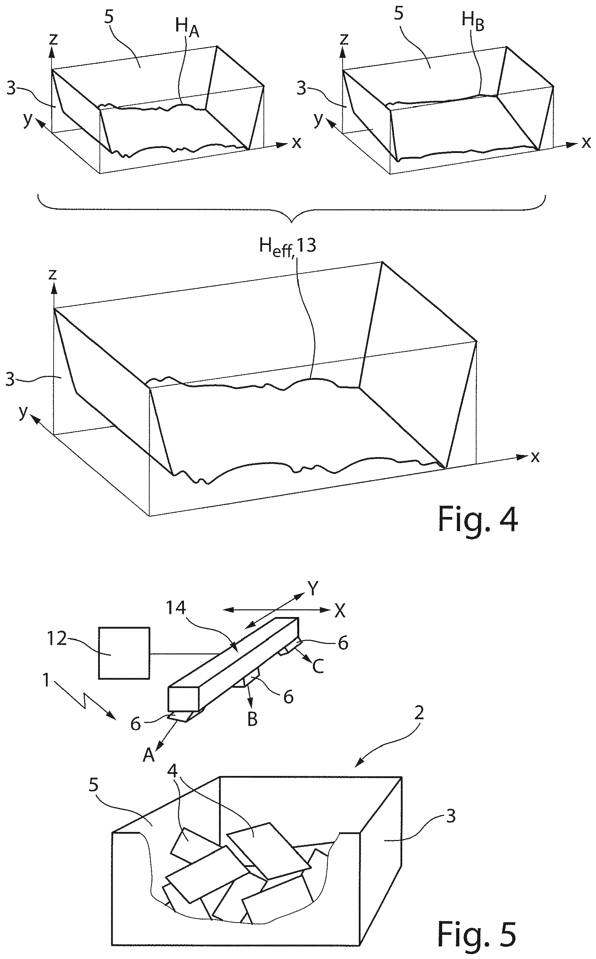

In **Fig. 4** sind die mit der einen Messrichtung A ortsaufgelöst gemessene Füllstandshöhe **H_{A}** und die mit der anderen Messrichtung B ortsaufgelöst gemessene Füllstandshöhe **H_{B}** gezeigt. Der Distanzsensor 6 ist mit einer Auswerteeinheit **12** verbunden, die aus den mehreren messrichtungsabhängigen, ortsaufgelösten Füllstandshöhenmessungen H_{A}, H_{B} nachträglich mindestens eine der folgenden Größen ermittelt:
- ortsaufgelöste effektive Füllstandshöhe und/oder Hüllfläche des Schüttguts: Durch Überlagerung der beiden messrichtungsabhängigen Füllstandshöhenmessungen H_{A}, H_{B} kann für jeden Messpunkt die ortsaufgelöste effektive Füllstandshöhe **H_{eff}** bzw. ggf. durch zusätzliche Inter- oder Extrapolation die ortsaufgelöste dreidimensionale Hüllfläche **13** des Schüttguts 2 bestimmt werden, indem an jedem Messpunkt nur der jeweils größere Messwert der beiden messrichtungsabhängigen Füllstandshöhenmessungen H_{A}, H_{B} berücksichtigt wird.
- globales Maximum des Schüttguts:
   Das globale Maximum des differenzierten Schüttgutsignals entspricht dem höchsten Punkt des Schüttguts und kann genutzt werden, um eine Überfüllung des Behälters zu detektieren.
- Schüttgutvolumen:
   Für die Volumenberechnung wird neben der Hüllfläche 13 die räumliche Ausprägung (Länge und Breite) des Schüttgutbehälters 3 benötigt. Diese kann entweder vorbekannt sein oder durch eine Referenzmessung des Ultraschall-Distanzsensors 6 an einem leeren Schüttgutbehälter ermittelt werden. Aus der Differenz zwischen der Hüllfläche 13 und der räumlichen Ausprägung des Schüttgutbehälters 3 lässt sich dann das Schüttgutvolumen berechnen.
- Füllgrad des Schüttgutbehälters 3:
   Aus dem Verhältnis zwischen Schüttgutvolumen und Behältervolumen kann der Füllgrad des Schüttgutbehälters 3 bestimmt werden.

Von der Vorrichtung 1 der Fig. 1 unterscheidet sich die in **Fig. 5** gezeigte nicht erfindungsgemäße Vorrichtung **1'** lediglich dadurch, dass hier oberhalb der Behälteröffnung 5 eine in X- und/oder Y-Richtung verfahrbare Sensoreinheit **14** mit mehreren, hier lediglich beispielhaft drei Ultraschall-Distanzsensoren 6, welche in unterschiedlichen Messrichtungen A, B, C ausgerichtet sind, angeordnet ist.

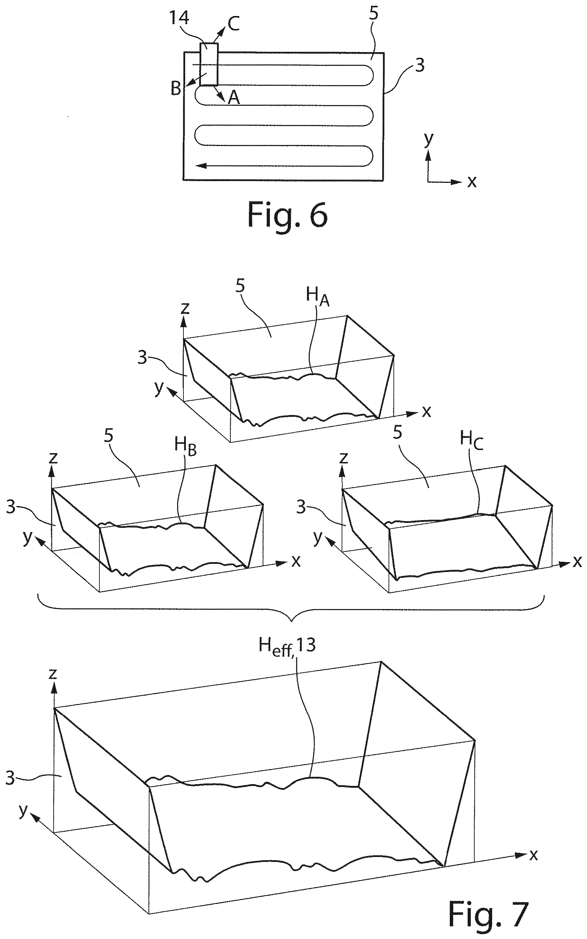

Die Behälteröffnung 5 wird von der Sensoreinheit 14 überfahren, um die Füllstandshöhe H des Schüttguts 2 ortsaufgelöst für jede der Messrichtungen A-C flächendeckend über der Behälteröffnung 5 zu messen. In **Fig. 6** ist eine mögliche Bahnkurve der Sensoreinheit 14 zum flächendeckenden Überfahren der Behälteröffnung 5 gezeigt. Die drei Distanzsensoren 6 sind quer zu ihrer Hauptverfahrrichtung X gegeneinander versetzt angeordnet, wobei, gesehen in X-Richtung, die Messrichtung B entgegengesetzt zu den Messrichtungen A, C gerichtet ist und, gesehen in Y-Richtung, die Messrichtungen A, C einander entgegengesetzt gerichtet sind.

Aus den drei messrichtungsabhängigen, ortsaufgelösten Füllstandshöhenmessungen H_{A}, H_{B}, H_{C} ermittelt die mit den Distanzsensoren 6 verbundene Auswerteeinheit 12 entweder in Echtzeit oder auch nachträglich mindestens eine der oben genannten Größen.

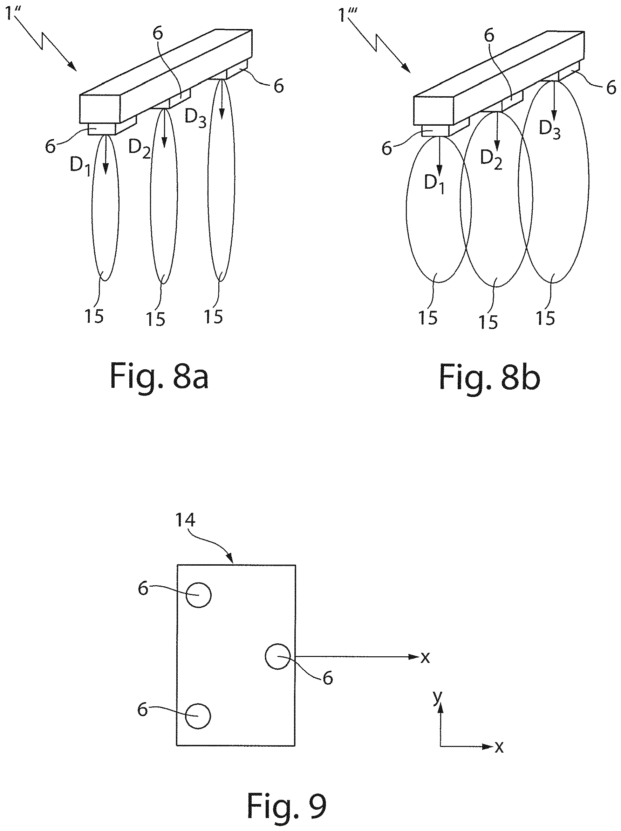

Von der Vorrichtung 1 der Fig. 1 unterscheiden sich die in **Fign. 8a und 8b** gezeigten erfindungsgemäßen Vorrichtungen **1", 1'''** lediglich dadurch, dass hier oberhalb der Behälteröffnung 5 eine in X- und/oder Y-Richtung verfahrbare Sensoreinheit 14 mit mehreren, hier lediglich beispielhaft drei Ultraschall-Distanzsensoren 6 angeordnet ist, deren Ultraschall-Messrichtungen **D1, D2, D3** parallel oder zumindest nahezu parallelen verlaufen. Aus den mehreren ortsaufgelösten Füllstandshöhenmessungen H_{D1}, H_{D2}, H_{D3} kann dann nachträglich mindestens eine der oben genannten Größen ermittelt werden.

In Fig. 8a überlappen die von den Ultraschall-Distanzsensoren 6 ausgesandten Ultraschall-Messkegel **15** innerhalb des Behälters 2 einander nicht oder zumindest nicht wesentlich, so dass sich die einzelnen Ultraschall-Messsignale der Ultraschall-Distanzsensoren 6 gegenseitig nicht bzw. nur vernachlässigbar beeinflussen und somit mit den Ultraschall-Distanzsensoren 6 gleichzeitig Ultraschall-Messungen durchgeführt werden können.

In Fig. 8b , nicht erfindungsgemäß, überlappen die von den Ultraschall-Distanzsensoren 6 ausgesandten Ultraschall-Messkegel 15 innerhalb des Behälters 2 einander, so dass entweder mit den Ultraschall-Distanzsensoren 6 nicht gleichzeitig Ultraschall-Messungen durchgeführt werden können oder die Ultraschallsignale jeder Ultraschall-Messung derart kodiert werden müssen, dass sie von den Ultraschallsignalen anderer Ultraschallmessungen unterscheidbar sind.

Wie in **Fig. 9** gezeigt, kann in den Fign. 8a, 8b einer der drei Ultraschall-Distanzsensoren 6 - z.B. wie im gezeigten Ausführungsbeispiel der mittlere Ultraschall-Distanzsensor - in beiden Verfahrrichtungen X, Y der Sensoreinheit 14 jeweils gegenüber den beiden anderen Ultraschall-Distanzsensoren 6 versetzt angeordnet sein, um beim Verfahren der Sensoreinheit 14 in X-Richtung gegenüber den anderen beiden Ultraschall-Distanzsensoren 6 vor- oder nacheilend zu messen. Damit kann insbesondere vermieden werden, dass die Ultraschall-Messkegel 15 innerhalb des Behälters 2 einander überlappen.

## Patentansprüche

1. Verfahren zum Bestimmen der ortsaufgelösten Füllstandshöhe in einem oben offenen Schüttgutbehälter (3), wobei die Füllstandshöhe (H) des im Schüttgutbehälter (3) befindlichen Schüttguts (2) von oben mittels Ultraschall ortsaufgelöst über der Behälteröffnung (5) gemessen wird, und wobei aus den mehreren ortsaufgelösten Füllstandshöhenmessungen (H_{A}, H_{B}; H_{A}, H_{B}, H_{C}; H_{D1}, H_{D2}, H_{D3}) mindestens eine der folgenden Größen ermittelt wird:
- eine ortsaufgelöste effektive Füllstandshöhe (H_{eff}),
- eine Hüllfläche (13) des Schüttguts (2),
- ein globales Maximum des Schüttguts (2), und
- einen Füllgrad des Schüttgutbehälters (3),
**dadurch gekennzeichnet,**
**dass** die Füllstandshöhe (H) des Schüttguts (2) von oben aus mehreren parallelen oder nahezu parallelen Ultraschall-Messrichtungen (D1, D2, D3) jeweils über der Behälteröffnung (5) ortsaufgelöst gemessen wird,
**dass** die mehreren Ultraschall-Messungen mit Ultraschall-Messkegeln (15), welche einander nicht oder zumindest nicht wesentlich überlappen, gleichzeitig durchgeführt werden, und
**dass** die Behälteröffnung (5) von den mehreren Ultraschall-Distanzsensoren (6) mindestens einmal überfahren wird, wobei zumindest einer der Ultraschall-Distanzsensoren (6) in mindestens einer, insbesondere in beiden Verfahrrichtungen (X, Y) jeweils gegenüber den anderen Ultraschall-Distanzsensoren (6) vor- oder nacheilend misst.

2. Verfahren nach Anspruch 1, **dadurch gekennzeichnet, dass** die Behälteröffnung (5) von den mehreren Ultraschall-Distanzsensoren (6) gemeinsam als Sensoreinheit (14) mindestens einmal überfahren wird.

3. Verfahren nach einem der vorhergehenden Ansprüche, **dadurch gekennzeichnet, dass** der Füllgrad des Schüttgutbehälters (3) aus den mehreren ortsaufgelösten Füllstandshöhenmessungen (H_{A}, H_{B}; H_{A}, H_{B}, H_{C}; H_{D1}, H_{D2}, H_{D3}) und einer ortsaufgelösten Füllstandshöhen-Referenzmessung an einem leeren Schüttgutbehälter, insbesondere aus der ermittelten Hüllfläche (13) des Schüttguts (2) und einer Referenz-Hüllfläche des leeren Schüttgutbehälters, ermittelt wird.

4. Vorrichtung (1 ") zur Bestimmung der ortsaufgelösten Füllstandshöhe in einem oben offenen Schüttgutbehälter (3), mit mehreren Ultraschall-Distanzsensoren (6) zum Überfahren der Behälteröffnung (5) des Schüttgutbehälters (3) und mit einer Auswerteeinheit (12), die aus mehreren ortsaufgelösten Füllstandshöhenmessungen (H_{A}, H_{B}; H_{A}, H_{B}, H_{C}; H_{D1}, H_{D2}, H_{D3}) mindestens eine der folgenden Größen ermittelt:
- eine ortsaufgelöste effektive Füllstandshöhe (H_{eff}),
- eine Hüllfläche (13) des Schüttguts (2),
- ein globales Maximum des Schüttguts (2), und
- einen Füllgrad des Schüttgutbehälters (3),
**dadurch gekennzeichnet,**
**dass** die mehreren Ultraschall-Distanzsensoren (6) in parallelen oder nahezu parallelen Messrichtungen (D1, D2, D3) ausgerichtet sind,
**dass** die Ultraschall-Messkegel (15) der mehreren Ultraschall-Distanzsensoren (6) einander nicht oder zumindest nicht wesentlich überlappen, und
**dass** eine Verfahreinrichtung (7) zum ein- oder zweidimensionalen Verfahren der mehreren Ultraschall-Distanzsensors (6) über der Behälteröffnung (5) vorhanden ist, wobei zumindest einer der Ultraschall-Distanzsensoren (6) in mindestens einer, insbesondere in beiden Verfahrrichtungen (X, Y) jeweils gegenüber den anderen Ultraschall-Distanzsensoren (6) versetzt angeordnet ist.

5. Vorrichtung nach Anspruch 4, **dadurch gekennzeichnet, dass** die mehreren Ultraschall-Distanzsensoren (6) eine gemeinsam verfahrbare Sensoreinheit (14) ausbilden.

## Claims

1. Method for determining the spatially resolved filling level in a bulk material container (3) which is open at the top, wherein the filling level (H) of the bulk material (2) located in the bulk material container (3) is measured from the top by means of ultrasound in a spatially resolved manner above the container opening (5), and wherein based on the plurality of spatially resolved filling level measurements (H_{A}, H_{B}; H_{A}, H_{B}, H_{C}; H_{D1}, H_{D2}, H_{D3}) at least one of the following variables is determined:
- a spatially resolved effective filling level (H_{eff}),
- an envelope surface (13) of the bulk material (2),
- a global maximum of the bulk material (2), and
- a filling level of the bulk material container (3),
**characterized in that**
the filling level (H) of the bulk material (2) is measured in a spatially resolved manner from the top from a plurality of parallel or almost parallel ultrasound measuring directions (D1, D2, D3) above the container opening (5) in each case,
the plurality of ultrasound measurements are performed simultaneously using ultrasound measuring cones (15) which do not overlap each other or overlap at least not significantly, and
the container opening (5) is traversed at least once by the plurality of ultrasound distance sensors (6), wherein at least one of the ultrasound distance sensors (6) performs measurement in a leading or lagging manner with respect to the other ultrasound distance sensors (6) in each case, in at least one, in particular in both directions of movement (X, Y).

2. Method according to claim 1, **characterized in that** the container opening (5) is traversed at least once by the plurality of ultrasound distance sensors (6) together as sensor unit (14).

3. Method according to any one of the preceding claims, **characterized in that** the filling level of the bulk material container (3) is determined from the plurality of spatially resolved filling level measurements (H_{A}, H_{B}; H_{A}, H_{B}, H_{C}; H_{D1}, H_{D2}, H_{D3}) and a spatially resolved filling level reference measurement on an empty bulk material container, in particular from the determined envelope surface (13) of the bulk material (2) and a reference envelope surface of the empty bulk material container.

4. Device (1") for determining the spatially resolved filling level in a bulk material container (3) which is open at the top, comprising a plurality of ultrasound distance sensors (6) for traversing the container opening (5) of the bulk material container (3) and comprising an evaluation unit (12) which determines from a plurality of spatially resolved filling level measurements (H_{A}, H_{B}; H_{A}, H_{B}, H_{C}; H_{D1}, H_{D2}, H_{D3}) at least one of the following variables:
- a spatially resolved effective filling level (H_{eff}),
- an envelope surface (13) of the bulk material (2);
- a global maximum of the bulk material (2), and
- a filling level of the bulk material container (3),
**characterized in that**
the plurality of ultrasound distance sensors (6) are aligned in parallel or almost parallel measuring directions (D1, D2, D3),
the ultrasound measuring cones (15) of the plurality of ultrasound distance sensors (6) do not overlap each other or overlap at least not significantly, and a movement device (7) is provided for moving the plurality of ultrasound distance sensors (6) in one or two dimensions over the container opening (5), wherein at least one of the ultrasound distance sensors (6) is arranged offset in at least one, in particular in both directions of movement (X, Y) with respect to the other ultrasound distance sensors (6) in each case.

5. Device according to claim 4, **characterized in that** the plurality of ultrasound distance sensors (6) form a jointly movable sensor unit (14).

## Revendications

1. Procédé de détermination de la hauteur de remplissage spatialement résolue dans un conteneur (3) de produits en vrac ouvert en partie haute, la hauteur de remplissage (H) du produit en vrac (2), situé dans ledit conteneur (3), étant mesurée depuis le haut avec résolution spatiale au moyen d'ultrasons, au-dessus de l'ouverture (5) dudit conteneur, et au moins l'une des grandeurs ci-après étant spécifiée sur la base des multiples mesures de hauteurs de remplissage (H_{A}, H_{B} ; H_{A}, H_{B}, H_{C} ; H_{D1}, H_{D2}, H_{D3}) effectuées avec résolution spatiale :
- une hauteur de remplissage (H_{eff}) effective, spatialement résolue,
- une surface enveloppante (13) du produit en vrac (2),
- un maximum global dudit produit en vrac (2), et
- un degré de remplissage du conteneur (3) de produits en vrac,
**caractérisé par le fait**
**que** la hauteur de remplissage (H) du produit en vrac (2) est mesurée depuis le haut avec résolution spatiale, à chaque fois au-dessus de l'ouverture (5) du conteneur, à partir de plusieurs directions de mesure ultrasonique (D1, D2, D3) parallèles ou approximativement parallèles ;
**que** les multiples mesures ultrasoniques sont effectuées, en simultanéité, par des cônes (15) de mesure ultrasonique qui ne se chevauchent pas mutuellement ou, pour le moins, de manière non significative ; et
**que** ladite ouverture (5) du conteneur est franchie par-dessus, au moins une fois, par les multiples capteurs de distances (6) à ultrasons, au moins l'un desdits capteurs de distances (6) à ultrasons effectuant, à chaque fois, une mesure anticipée ou différée par rapport aux autres capteurs de distances (6) à ultrasons, dans au moins une et, notamment, dans les deux directions de déplacement (X, Y).

2. Procédé selon la revendication 1, **caractérisé par le fait que** l'ouverture (5) du conteneur est franchie par-dessus, au moins une fois, par les multiples capteurs de distances (6) à ultrasons qui constituent associativement une unité de détection (14).

3. Procédé selon l'une des revendications précédentes, **caractérisé par le fait que** le degré de remplissage du conteneur (3) de produits en vrac est spécifié sur la base des multiples mesures de hauteurs de remplissage (H_{A}, H_{B} ; H_{A}, H_{B}, H_{C} ; H_{D1}, H_{D2}, H_{D3}), effectuées avec résolution spatiale, et d'une mesure de référence de hauteur de remplissage effectuée avec résolution spatiale sur un conteneur de produits en vrac vide, en particulier sur la base de la surface enveloppante spécifiée (13) du produit en vrac (2), et d'une surface enveloppante de référence dudit conteneur de produits en vrac vide.

4. Dispositif (1") dévolu à la détermination de la hauteur de remplissage spatialement résolue dans un conteneur (3) de produits en vrac ouvert en partie haute, comprenant plusieurs capteurs de distances (6) à ultrasons, conçus pour franchir par-dessus l'ouverture (5) dudit conteneur (3) de produits en vrac, et une unité d'évaluation (12) spécifiant au moins l'une des grandeurs ci-après, sur la base de multiples mesures de hauteurs de remplissage (H_{A}, H_{B} ; H_{A}, H_{B}, H_{C} ; H_{D1}, H_{D2}, H_{D3}) effectuées avec résolution spatiale :
- une hauteur de remplissage (H_{eff}) effective, spatialement résolue,
- une surface enveloppante (13) du produit en vrac (2),
- un maximum global dudit produit en vrac (2), et
- un degré de remplissage du conteneur (3) de produits en vrac,
**caractérisé par le fait**
**que** les multiples capteurs de distances (6) à ultrasons sont orientés dans des directions de mesure (D1, D2, D3) parallèles ou approximativement parallèles ;
**que** les cônes (15) de mesure ultrasonique desdits multiples capteurs de distances (6) à ultrasons ne se chevauchent pas mutuellement ou, pour le moins, de manière non significative ; et
**qu'**un système de déplacement (7) est présent au-dessus de l'ouverture (5) du conteneur, en vue du déplacement unidirectionnel ou bidirectionnel desdits capteurs de distances (6) à ultrasons, sachant qu'au moins l'un desdits capteurs de distances (6) à ultrasons occupe à chaque fois, dans au moins une et, notamment, dans les deux directions de déplacement (X, Y), une position décalée par rapport aux autres capteurs de distances (6) à ultrasons.

5. Dispositif selon la revendication 4, **caractérisé par le fait que** les multiples capteurs de distances (6) à ultrasons constituent une unité de détection (14) déplaçable concurremment.
